Europäisches Patentamt

(19) European Patent Office

Office européen des brevets

(11) Publication number : **0 338 769 B1**

(12) **EUROPEAN PATENT SPECIFICATION**

(45) Date of publication of patent specification :
21.09.94 Bulletin 94/38

(51) Int. Cl.⁵ : **G21C 17/02,** G21C 19/28,
C23F 11/08

(21) Application number : **89303816.6**

(22) Date of filing : **18.04.89**

(54) **Process for inhibiting corrosion in a pressurized water nuclear reactor.**

(30) Priority : **20.04.88 US 184557**

(43) Date of publication of application :
**25.10.89 Bulletin 89/43**

(45) Publication of the grant of the patent :
**21.09.94 Bulletin 94/38**

(84) Designated Contracting States :
**BE ES FR GB IT**

(56) References cited :
EP-A- 0 257 465
JOURNAL OF THE BRITISH NUCLEAR ENER-
GY SOCIETY, vol. 26, no. 2, April 1987, pages
65-73; M.E. PICK: "4th International confer-
ence on water chemistry of nuclear reactor
systems"
NUCLEAR ENGINEERING INTERNATIONAL,
vol. 32, no. 399, October 1987, pages 26-27;
M.J.B. HUDSON et al.: "GEZIP zinc injection
used at hope creek and millstone"

(73) Proprietor : **WESTINGHOUSE ELECTRIC
CORPORATION**
**Westinghouse Building**
**Gateway Center**
**Pittsburgh Pennsylvania 15222 (US)**

(72) Inventor : **Panson, Armand Julian**
**121 Grandview Avenue**
**Pittsburh, PA 15211 (US)**
Inventor : **Bergmann, Carl Adoph**
**638 Briarwood Avenue**
**Pittsburg, PA 15228 (US)**

(74) Representative : **van Berlyn, Ronald Gilbert**
**23, Centre Heights**
**London NW3 6JG (GB)**

## Description

The invention relates to a process for inhibiting corrosion in a pressurized water nuclear reactor, and more particularly for inhibiting corrosion within the primary circuit of a pressurized water nuclear reactor.

Corrosion is a particular concern for nuclear reactors in which water is present as a coolant. Several methods have been proposed to deal with the problem, including dissolving oxide scale from the structure of the nuclear reactor, as disclosed in U.S. Patent No. 3,664,870 to Oberhofer et al. and U.S. Patent No. 4,042,455 to Brown.

Another approach, as disclosed in U.S. Patent No. 4,364,900 to Burrill, is to inhibit corrosion formation within the reactor system. Burrill adds from about 120 to about 200 milligrams of ammonia per kilogram of coolant water to reduce crevice corrosion in the core of pressurized water nuclear reactors.

Zinc ions are thought to inhibit corrosion within boiling water nuclear reactors, and such ions from zinc oxide and zinc chloride have been described for use in boiling water nuclear reactors.

As discussed by W. J. Marble in "Control of Radiation-Field Buildup in BWRs", Electric Power Research Institute NP-4072. Project 189-2, Interim Report, June 1985, zinc in the form of ZnO was used in a boiling water reactor plant. It was discussed therein that soluble zinc, by acting as a corrosion inhibitor for stainless steel, significantly reduces the amount of oxide formed on the pipes and thus the amount of Co-60 incorporated in the system. The hypothesis proposed on page 4-2 of that reference was that zinc cations normally found in zinc oxide crystals will tend to modify the normal magnetite crystal defect structure so that a more protective film is formed and corrosion significantly inhibited. Further, the presence of zinc ions in the reactor coolant water of boiling water reactors having brass tubing, as discussed at page 6-1, has been correlated with a reduced amount of corrosion and radioactive cobalt transport throughout the reactor. Zinc introduced in the form of zinc chloride ($ZnCL_2$) was also laboratory tested as a corrosion inhibitor under power plant operating conditions, as discussed by L. W. Niedrach and W. H. Stoddard in "Effect of Zinc on Corrosion Films that Form on Stainless Steel", Corrosion 42, 546 (1986).

The use of zinc oxide as a source of zinc ions has the drawback that zinc oxide is not particularly soluble in water, and, therefore, the zinc oxide must be added to the coolant as a slurry or suspension, rather than as a solution.

Pressurized water nuclear reactors are thermal reactors in which water is used as the coolant and as the moderator. The water is circulated by pumps throughout a primary circuit, that includes a pressure vessel, which houses the heat generating reactor core, and a plurality of flow loops. The heat absorbed by the water as it passes through the reactor core is transferred by means of a heat exchanger to a readily vaporizable liquid (water) in a secondary circuit in which the thermal energy is used to produce electricity. The water is then returned to the pressure vessel. The water in the primary circuit, which normally contains boric acid as a moderator, passes through numerous metal, generally stainless steel and Alloy 600, conduits, all of which are subject to corrosion. Further, some radioactive cobalt from the reactor core is dissolved in the water as the metal ion and transported throughout the primary circuit. The transport of radioactive cobalt throughout the primary circuit results in a level of residual radioactivity throughout the primary circuit that is not desired.

Thus, it is desired to develop a process for inhibiting corrosion in a pressurized water nuclear reactor.

An object of the invention is to provide a process for inhibiting corrosion in a nuclear reactor by the addition of zinc to the coolant water flowing therethrough in a soluble form.

The present invention provides a process for inhibiting corrosion caused by the presence of coolant water passing through a pressurized water nuclear reactor. An effective amount of an aqueous solution of zinc borate is added to the reactor coolant water. As a result of the process, the transport of corrosion products and radioactive cobalt ions through the reactor system, as well as levels of radioactivity within the reactor system, are reduced.

The aqueous solution of zinc borate is preferably an aqueous solution of zinc borate in boric acid, with the zinc borate preferably added to the reactor coolant water so that zinc ions are present in the reactor coolant water in an amount of from about 10 to about 200 parts per billion.

This invention has the advantage of inhibiting corrosion of the primary circuit of a pressurized water reactor and the resultant transport of resultant corrosion products through the system in a way that has no deleterious effects.

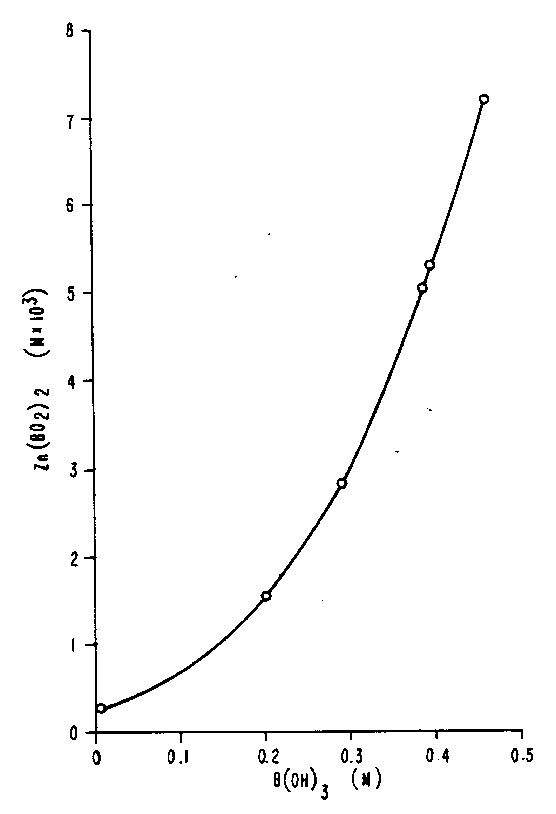

The invention will become more readily apparent from the following description of the preferred embodiment thereof, shown by way of example only, in the accompanying drawing wherein:

The attached drawing illustrates the solubility of zinc borate as a function of boric acid concentration in water.

The process of the present invention involves the addition of an effective amount of an aqueous solution of zinc borate $Zn(BO_2)_2$, to the reactor coolant water of a pressurized water reactor so that zinc ions are present in said reactor coolant water in an amount of from about 10 to about 200 parts per billion. The zinc ions which are thereby added to the reactor coolant water serve to inhibit corrosion within the pressurized water nuclear reactor system, and more specifically, within the primary circuit of a pressurized water nuclear reactor system.

An advantage of using zinc borate as the source of zinc ions is that zinc borate is sufficiently soluble in water. Thus, the zinc ions can be added to the reactor coolant water as an aqueous solution, rather than as a slurry.

Preferably, the aqueous solution of zinc borate is an aqueous solution of zinc borate in aqueous boric acid. Zinc borate, as shown in the drawing, is sufficiently soluble in a boric acid solution so as to provide a solution thereof of for addition to the reactor coolant water. An important advantage of using an aqueous solution of zinc borate in boric acid is that boric acid is often conventionally added to the coolant water of pressurized water nuclear reactors as a neutron absorber or "chemical shim". Generally, the concentration of boric acid in the coolant water of pressurized water reactors for such a purpose is up to about 0.1 molar (M). Thus, the borate anion from the zinc borate will not introduce an additional anion to the coolant water that would serve as a corrosion accelerator, or otherwise upset the chemical balance of the reactor coolant water.

The aqueous solution of zinc borate can be prepared by adding a 0.1N (normal) zinc nitrate solution, which has been heated, to a 0.15 normal solution of borax while stirring. The resulting white flocculent precipitate is dried, washed with water, washed with alcohol, and dried again at a temperature of between 60.C and about 70.C, to form a fine powder which is readily dissolved in boric acid solutions. An alternative method of preparing the aqueous solution of zinc borate is to react an aqueous solution of boric acid with zinc oxide at an elevated temperature. An equal volume of a 96 percent, by weight, alcohol is added to the aqueous solution of boric acid and zinc oxide to cause the formation of a white gelatinous precipitate of the general composition $Zn(BO_2) \cdot H_2O$. These methods are described by B. M. Shchigol, in "Some Properties of Zinc and Calcium Borates", Russian Journal of Inorganic Chemistry, September 1959, pp. 913 to 915. Zinc borate, identified as $Zn_3B_4O_9 \cdot 5H_2O$, may also be purchased commercially from Alpha Products of Danvers, Massachusetts.

The aqueous solution of zinc borate is preferably added to the reactor coolant water so that the concentration of zinc ions in the coolant water is from about 10 to about 200 parts per billion (ppb), more preferably, from about 10 to about 50 ppb, and, most preferably, from about 10 to about 20 ppb.

Laboratory testing was carried out in a refreshed autoclave to evaluate the effect of zinc borate addition on the corrosion behavior of four materials exposed in a pressurized water reactor primary coolant environment. These four materials were 304 stainless steel, Alloy 600, Alloy 690, and Zircaloy-4. The surface conditions of the specimens were similar to that in a pressurized water reactor: ground surface for the 304 stainless steel (304) the inside of a tube for Alloys 600 (600) and 690 (690), and the outside of a tube for Zircaloy-4 (Zirc-4). The refreshed autoclave system consisted of a four-liter 316 stainless steel autoclave, a 20 liter 304 stainless steel solution reservoir, a pressurizing feed pump, and a back pressure regulator. The solution reservoir was pressurized with 29 psia hydrogen gas to produce a dissolved hydrogen value of 35 cc (STP)/kg water.

Two refreshed tests were performed at 300°C. The first test had the "middle-of-life" (MOL) primary chemistry (500 ppm boron as boric acid and 1.1 ppm lithium as lithium hydroxide) and served as a reference. The second test had the MOL chemistry + 100 ppb zinc as borate. The initial and final solutions for each of the two tests were analyzed for lithium and boron. For the second test, analyses were performed for zinc before, during, and after the test. Zinc additions, when needed, were made shortly after the analysis to compensate for zinc depletion. The duration of each of the two tests was 300 hours.

The chemical analyses of the solutions in the two tests are as follows:

CHEMICAL ANALYSES OF SIMULATED
PWR REACTOR PRIMARY COOLANT
WITH AND WITHOUT ZINC ADDITION

Tests 1 and 2 - Li/B Analysis

| Solution | Test | Li (ppm) | B (ppm) | pH | Cond. ( S/cm) |
|---|---|---|---|---|---|
| Initial | 1 | 1.3 | 500 | 6.1 | 11 |
| Final | 1 | 1.1 | 500 | 6.2 | 13 |
| Initial | 2 | 1.3 | 500 | 5.8 | 10 |
| Final | 2 | 1.1 | 500 | 6.0 | 11 |

Test 2-Zn Analyses

| Hrs. | Zn Borate Addition (mg) | Analysis MUT | Analysis AC | Calculated MUT |
|---|---|---|---|---|
| 0 | 4.8 | 92 | | 100 |
| 48 | | 78 | 15 | |
| 50 | 1.0 | | | 99 |
| 144 | | 86 | 33 | |
| 146 | 1.0 | | | 107 |
| 216 | | 102 | 38 | |
| 218 | None | | | |
| 300 | | 82 | 72 | |

Note that the zinc in the autoclave (AC) did not approach the 100 ppb test conditions until near the end of the test. On the average, the specimens were exposed to a zinc concentration of about 40 ppb. The behavior of the zinc concentrations in the autoclave and makeup tank (MUT) during the first half of the test indicates that zinc was being deposited or incorporated into the surface of the autoclave or sample specimens. As the test progressed, the rate of zinc incorporation was reduced, since the final analysis showed the concentrations in the makeup tank and autoclave were about equal.

After the 300 hour exposure, the specimens were removed from the autoclave and photographed. Scanning electron microscope photographs were also taken to determine if the zinc addition had affected the film morphology and for evidence of incorporation of zinc into the corrosion film.

Photographs of the four specimen surfaces exposed to normal and zinc added coolant showed slightly darker surfaces for 304, 600 and 690 specimens while there was not much difference between the Zirc-4 specimens. Since darker oxides on specimens exposed under the same conditions are generally thicker, the lighter oxide on the three materials suggest that the zinc borate addition has produced a thinner oxide than was produced without the addition.

As a result of the process of the invention, the corrosion within the reactor is inhibited. Thus, the transport of corrosion products and radioactive cobalt ions through the reactor, as well as levels of radioactivity within the reactor, are reduced.

## Claims

1. Process for inhibiting corrosion caused by the presence of coolant water passing through the primary circuit of a pressurized water nuclear reactor system whereby the transport of corrosion products and radioactive cobalt ions through the primary circuit, as well as levels of radioactivity within the primary circuit, are reduced characterized in that an effective amount of an aqueous solution of zinc borate is added to the reactor coolant water so that zinc ions are present in said reactor coolant water in an amount of from about 10 to about 200 parts per billion.

2. The process as defined in claim 1 further characterized in that said aqueous solution of zinc borate is a solution of zinc borate in aqueous boric acid.

3. The process as defined in claim 1 or 2 further characterized in that said zinc ions are present in an amount of about 10 to 50 parts per billion.

4. The process as defined in claim 1, 2 or 3 further characterized in that said zinc ions are present in an amount of about 10 to 20 parts per billion.

**Patentansprüche**

1. Verfahren zur Korrosionsverhinderung, die durch Gegenwart von Kühlwasser erzeugt wird, das durch den Primärkreis eines Druckwasserkernreaktorsystems läuft, wobei der Transport von Korrosionsprodukten und radioaktiven Kobaltionen durch den Primärkreis wie auch Radioaktivitätsstände in dem Primärkreis verringert werden, dadurch gekennzeichnet, dass eine wirksame Menge einer wässrigen Lösung aus Zinkborat zum Reaktorkühlwasser zugegeben wird, so dass Zinkionen in dem Reaktorkühlwasser in einer Menge von ungefähr 10 bis ungefähr 200 Teilen pro Milliarde vorhanden sind.

2. Verfahren nach Anspruch 1, weiterhin dadurch gekennzeichnet, dass die wässrige Lösung aus Zinkborat eine Lösung von Zinkborat in wässriger Borsäure ist.

3. Verfahren nach Anspruch 1 oder 2, weiterhin dadurch gekennzeichnet, dass die Zinkionen in einer Menge von ungefähr 10 bis 50 Teilen pro Milliarde vorhanden sind.

4. Verfahren nach Anspruch 1, 2 oder 3, weiterhin dadurch gekennzeichnet, dass die Zinkionen in einer Menge von ungefähr 10 bis 20 Teilen pro Milliarde vorhanden sind.

**Revendications**

1. Procédé pour l'inhibition de la corrosion due à la présence d'eau de refroidissement circulant dans le circuit primaire d'un système de réacteur nucléaire à eau sous pression, réduisant le transport de produits de corrosion et d'ions cobalt radiocactifs dans le circuit primaire, ainsi que les niveaux de radioactivité dans le circuit primaire, caractérisé en ce que l'on ajoute une quantité efficace d'une solution aqueuse de borate de zinc à l'eau de refroidissement du réacteur de façon à ce que les ions zinc soient présents dans ladite eau de refroidissement du réacteur en une quantité d'environ 10 à environ 200 parties par milliard.

2. Procédé conforme à la revendication 1, caractérisé en outre en ce que ladite solution aqueuse de borate de zinc est une solution aqueuse de borate de zinc dans l'acide borique.

3. Procédé conforme à la revendication 1 ou 2, caractérisé en outre en ce que lesdits ions zinc sont présents à raison d'environ 10 à 50 parties par milliard.

4. Procédé conforme à la revendication 1,2 ou 3, caractérisé en outre en ce que lesdits ions zinc sont présents à raison d'environ 10 à 20 parties par milliard.